# EUROPEAN PATENT APPLICATION

(11) **EP 4 412 038 A1**
(43) Date of publication of application: **07.08.2024**
(21) Application number: 21959349.8
(22) Date of filing: 29.09.2021
(51) Int. Cl.: H02K 1/27

(54) **ROTOR AND ELECTRIC MOTOR**

(71) Applicant: Aichi Steel Corporation, Tokai-shi, Aichi 476-8666 (JP)
(72) Inventor: TSUGE, Yuki, Tokai-shi, Aichi 476-8666 (JP); FUJIMAKI, Tadashi, Tokai-shi, Aichi 476-8666 (JP)
(74) Representative: Kuhnen & Wacker Patent- und Rechtsanwaltsbüro PartG mbB
(86) International application number: PCT/JP2021/036012
(87) International publication number: WO 2023/053307

(57) **Abstract**

The present invention provides a rotor comprising: a main body composed of a soft magnetic material; and a permanent magnet provided inside or outside the main body. The permanent magnet is a bonded magnet comprising a magnet powder and a binder resin that binds the magnet powder. The bonded magnet includes 87-96 mass% of the magnet powder relative to the bonded magnet as a whole. The magnet powder includes coarse powder having an average particle diameter of 40-200 µm and fine powder having an average particle diameter of 1-10 µm. The coarse powder has a mass ratio of 60-90 mass% to a total of the coarse powder and the fine powder. The binder resin includes a thermosetting resin. The bonded magnet has a resin layer with an average thickness of 0.1-5 µm, for example, in a vicinity of a joint interface with the main body. The bonded magnet can be firmly joined to the main body, and the rotor can therefore rotate at high speed. The main body is, for example, a rotor core of an IPM motor.

## Description

### [Technical Field]

The present invention relates to a rotor of an electric motor and relevant techniques.

### [Background Art]

There are various types of electric motors (also simply referred to as "motors" including generators). In recent years, with the development of inverter control and the spread of rare earth magnets having high magnetic characteristics, synchronous machines that can save power and have high efficiency, high torque, or high output are attracting attention.

The synchronous machine is a permanent magnet field-type motor that includes a permanent magnet (field source) in the rotor and an armature (winding wire) in the stator. The synchronous machine is an AC motor whose winding wire is supplied with alternating current (AC) and whose rotor is driven in accordance with a rotating magnetic field generated on the stator side. Synchronous machines include interior magnet-type motors (also referred to as "IPM motors") in which permanent magnets are installed (embedded) inside the rotor and surface magnet-type motors (also referred to as "SPM motors") in which permanent magnets are installed on the outer peripheral surface side of the rotor.

The permanent magnets installed in rotors include sintered magnets obtained by sintering magnet powder and bonded magnets obtained by shape-holding (binding, holding) magnet powder with a binder resin. Bonded magnets have a greater degree of freedom in shape than sintered magnets and are excellent in the productivity, so they are increasingly being used as field sources for rotors.

Examples of the bonded magnets include injection-bonded magnets obtained by injection-molding a molten mixture of magnet powder and thermoplastic resin in a cavity (such as a rotor core slot) and compression-bonded magnets obtained by compression-molding a mixture or kneading of magnet powder and thermosetting resin in a cavity. In general, the compression-bonded magnets are more excellent in the magnetic characteristics and the heat resistance than the injection-bonded magnets. Descriptions related to such conventional compression bonded magnets are found in the following patent documents.

### [Prior Art Documents]

### [Patent Documents]

Patent Document 1: JP3731597B
Patent Document 2: JP2006-49554A

### [Summary of Invention]

### [Technical Problem]

The above patent documents only focus on the magnetic characteristics of bonded magnets, and make no mention of the effects or the like of bonded magnets on the strength, deformation, etc. of a rotor that can rotate at high speed.

The present invention has been made in view of such circumstances, and an object of the present invention is to provide a rotor and the like that use bonded magnets as field sources and are less likely to deform even in a high-speed rotation range.

### [Solution to Problem]

As a result of intensive studies to achieve the above object, the present inventors have found that a specific bonded magnet can firmly bond with a soft magnetic body (main body of a rotor) and suppress the deformation of the rotor in a high-speed rotation range. Developing this achievement, the present inventors have accomplished the present invention, which will be described below.

### «Rotor»

(1) The present invention provides a rotor comprising: a main body composed of a soft magnetic material; and a permanent magnet provided inside or outside the main body. The permanent magnet is a bonded magnet comprising a magnet powder and a binder resin that binds the magnet powder. The bonded magnet includes 87-96 mass% of the magnet powder relative to the bonded magnet as a whole. The magnet powder includes coarse powder having an average particle diameter of 40-200 µm and fine powder having an average particle diameter of 1-10 µm. The coarse powder has a mass ratio of 60-90 mass% to a total of the coarse powder and the fine powder. The binder resin includes a thermosetting resin. The bonded magnet is joined to the main body.
(2) The rotor of the present invention is less likely to deform even in a high-speed rotation range and can contribute to increasing the speed and output of an electric motor, etc. This is considered to be because the bonded magnet according to the present invention is firmly joined to the main body (rotor core) composed of a soft magnetic material. In the case of an IPM motor, for example, the bonded magnet according to the present invention is firmly bonded to the inner wall of a slot (magnet hole) provided in the main body. This can maintain the integrity of the bonded magnet and the main body even under high-speed rotation. As a result, even when large centrifugal force acts, the stress distribution of the rotor is reduced overall, and stress concentration or the like in a part of the main body (e.g., near a bridge portion located on the outer peripheral side of the slot) is avoided. Thus, deformation of the rotor (in particular, the main body), damage to the rotor, etc. are suppressed even under high-speed rotation, and it is possible to increase the rotation speed, output, etc. of the electric motor accordingly.

### «Electric Motor»

The present invention can also be perceived as an electric motor including the above-described rotor. The electric motor may preferably include a stator corresponding to the rotor. Note that electric motors as referred to in the present specification include generators.

### «Others»

Unless otherwise stated, a numerical range "x to y" as referred to in the present specification includes the lower limit x and the upper limit y. Any numerical value included in various numerical values or numerical ranges described in the present specification may be selected or extracted as a new lower or upper limit, and any numerical range such as "a to b" can thereby be newly provided using such a new lower or upper limit. Unless otherwise stated, a range "x-y µm" as referred to in the present specification means x µm to y µm. The same applies to other unit systems (such as MPa and kA/m).

### [Brief Description of Drawings]

FIG. 1A is a set of photographs showing a test piece for measuring bonding strength and a mold used for manufacturing the test piece.
FIG. 1B is a set of photographs showing a tensile test device for the test piece and a fractured test piece.
FIG. 2 is a graph illustrating the relationship between the bonding strength of the test piece and the amount of magnet powder contained in the bonded magnet of the test piece.
FIG. 3 is an enlarged (20,000×) observation image of the vicinity of the joint interface of the test piece (Sample 4).
FIG. 4 is a model diagram used to numerically analyze the stress distribution occurring in a rotor for an IPM motor.
FIG. 5A is a set of a graph illustrating, based on the numerical analysis results, the relationship between the maximum value of the maximum principal stress generated in the rotor and its rotation speed and contour figures illustrating the distribution of maximum principal stress generated in the rotor (at 34,000 rpm).
FIG. 5B is a set of a graph illustrating, based on the numerical analysis results, the relationship between the maximum value of the maximum principal stress generated in a bonded magnet in the rotor and its rotation speed and contour figures illustrating the distribution of maximum principal stress generated in the bonded magnet (at 34,000 rpm).
FIG. 6 is a graph illustrating the relationship between the rotation speed of a rotor (actual product) and the amount of deformation of its outer diameter during a spin test.

### [Embodiments for Carrying out the Invention]

One or more features freely selected from the matters described in the present specification can be added to the above-described features of the present invention. Methodological features regarding a manufacturing method can also be features regarding a product. Which embodiment is the best or not is different in accordance with objectives, required performance, and other factors.

### «Main Body»

The main body is composed of a soft magnetic material because it constitutes a part of the magnetic circuit. The soft magnetic material is, for example, a pure metal or alloy composed of an iron group element (Fe, Co, Ni). Representative examples of the soft magnetic material include pure iron and iron alloys (such as Fe-Si alloys).

In order to reduce the eddy current loss (also simply referred to as an "iron loss") that occurs in the main body during operation of an electric motor, it is preferred that the main body should have a large specific resistance (volume resistivity). The main body is, for example, a stack of electromagnetic steel sheets composed of steel sheets (e.g., silicon steel sheets) whose surfaces are insulated on at least one side, a powder compact composed of soft magnetic particles whose surfaces are insulated, or the like. The main body, on which large centrifugal force acts due to high-speed rotation, may be preferably composed of a stack of electromagnetic steel sheets. The stacking direction may be preferably a direction in which eddy currents are blocked by the insulating layers (usually in the direction of the rotation axis). The electromagnetic steel sheets may be bonded (stacked) together by any of swage, adhesion, fastening, etc.

The thickness of the electromagnetic steel sheets to be stacked is, for example, 0.1-1 mm in an embodiment, 0.2-0.7 mm in another embodiment, or 0.3-0.5 mm in still another embodiment. If unduly thin electromagnetic steel sheets are used, relatively non-magnetic insulating layers will increase, and the magnetic resistance and cost may increase. On the other hand, if unduly thick electromagnetic steel sheets are used, the eddy current loss increases and the efficiency of the electric motor may decrease. The "steel" as referred to in the present specification includes silicon steel, carbon steel, pure iron, etc., regardless of alloying elements other than Fe (including impurity elements). In the case of silicon steel sheets, Si is contained, for example, in an amount of 0.5-7 mass% in an embodiment or 2 to 4 mass% in another embodiment with respect to the entire steel.

### «Bonded Magnet»

(1) The bonded magnet is composed of a large number of magnet particles and a resin (including rubber, elastomer, various additives, etc.) that is a portion other than the magnet particles. Surface treatment agents and the like for magnet particles are considered to be included in the "magnet particles." In the present specification, for descriptive purposes, not only an aggregate of magnet particles that is a raw material for the bonded magnet, but also "a large number of magnet particles" that constitute the bonded magnet itself, are referred to as "magnet powder."

In order to ensure the strength of a rotor that can rotate at high speed and to suppress deformation or the like, the bonded magnet itself may preferably have sufficient strength relative to the bonding strength between the bonded magnet and the main body. To this end, the bonded magnet may preferably be dense and have few voids or the like that can become starting points for cracks, etc.

For example, the relative density of the bonded magnet may preferably be 90% or more in an embodiment, 95% or more in another embodiment, or 98% or more in still another embodiment. The upper limit of the relative density is 99.5% in an embodiment or 100% in another embodiment. The relative density (ρ/ρ₀) is obtained as the ratio (percentage) of an actual density (ρ) to a theoretical density (ρ₀). The theoretical density (ρ₀) can be obtained from the true densities of the magnet powder and the binder resin which constitute the bonded magnet and their compounding amounts. The actual density (ρ) can be obtained from the mass and volume determined by measuring the molded (and further cured) bonded magnet. The volume may be obtained by the Archimedes method, but it suffices that the volume is calculated from the shape (dimensions) of the molded body.

### (2) Magnet Powder

The magnet powder (magnet particles) may include coarse powder (coarse particles) and fine powder (fine particles) that have different average particle diameters. This allows a dense bonded magnet to be obtained, and its strength and magnetic characteristics can be improved.

The average particle diameter of the coarse powder is, for example, 40-200 µm in an embodiment or 80-160 µm in another embodiment. The average particle diameter of the fine powder is, for example, 1-10 µm in an embodiment or 2-6 µm in another embodiment. The average particle diameter as referred to in the present specification is determined by measuring the powder (including magnet particle aggregates recovered from bonded magnets) with the Fraunhofer method using a laser diffraction-type particle diameter distribution measuring device (HELOS available from Japan Laser Corporation).

The mass ratio of the coarse powder to the total of the coarse powder and the fine powder (or to the entire magnet powder) is, for example, 60-90 mass% in an embodiment or 75-85 mass% in another embodiment. In other words, the mass ratio of the fine powder to the total is, for example, 10-40 mass% in an embodiment or 15-25 mass% in another embodiment.

The mass ratio of the entire magnet powder is, for example, 87-96 mass% in an embodiment, 88-95.5 mass% in another embodiment, 90-95 mass% in still another embodiment, 91-94.5 mass% in yet another embodiment, or 92-94 mass% in still yet another embodiment to the entire bonded magnet (total of the magnet powder and the binder resin).

If the amount of magnet powder (simply referred to as a "magnet amount") is unduly small or large to the entire bonded magnet, the bonding strength between the bonded magnet and the main body may decrease. It is considered that if the magnet amount becomes unduly small (if the amount of resin becomes unduly large), a thick resin layer will be formed in the vicinity of the joint interface, causing cohesive failure to readily occur in that resin layer. Conversely, it is also considered that if the magnet amount becomes unduly large (if the amount of resin becomes unduly small), contact between the magnet particles and the main body will increase in the vicinity of the joint interface, causing interface failure to readily occur.

Various magnet powders can be used as the coarse powder and the fine powder, and the powders may have the same or different compositions, manufacturing methods, etc. At least one of the coarse powder and the fine powder may be a mixed powder of magnet powders having different compositions, manufacturing methods, characteristics, etc. Each powder may be an isotropic magnet powder, an anisotropic magnet powder, or a mixed powder thereof. When anisotropic magnet powder is used, the magnetic characteristics of the bonded magnet are improved and the output of the electric motor can be increased.

An example of the coarse powder is a NdFeB-based magnet powder containing Nd, Fe, and B as basic components (essential components or main components). An example of the fine powder is an SmFeN-based magnet powder containing Sm, Fe, and N as basic components or an SmCo-based magnet powder containing Sm and Co as basic components. NdFeB-based magnet powder whose particle size is adjusted may be used as the fine powder (a part thereof). A part of each powder may contain magnet powder (such as ferrite magnet powder) other than rare earth magnet powder.

The total amount of elements to be the basic components as referred to in the present specification is usually 80 at% or more in an embodiment, 90 at% or more in another embodiment, or 95 at% or more in still another embodiment with respect to the entire target object (magnet particles). The rare earth magnet powder may contain elements (heavy rare earth elements such as Dy and Tb, Cu, Al, Co, Nb, etc.) that enhance the coercive force, heat resistance, and the like.

A typical example of the coarse powder is hydrogen-treated rare earth (anisotropic) magnet powder. The hydrogen treatment is mainly associated with a disproportionation reaction by hydrogen absorption (Hydrogenation-Disproportionation/also simply referred to as an "HD reaction") and a recombination reaction by dehydrogenation (Desorption-Recombination/also simply referred to as a "DR reaction"). The HD reaction and the DR reaction are collectively referred to as an "HDDR reaction." The hydrogen treatment that causes the HDDR reaction is simply referred to as "HDDR (treatment)."

Unless otherwise stated, the HDDR as referred to in the present specification includes d-HDDR (dynamic-Hydrogenation-Disproportionation-Desorption-Recombination) which is a modified version of the HDDR. The d-HDDR is described in detail, for example, in the international publication (WO2004/064085), etc.

The magnet particles may be surface-treated with a surfactant or the like suitable for the binder resin. This can improve the bondability between the magnet particles and the resin, the posture variability of the magnet particles in the softened or molten resin, etc. Examples of the surfactant include titanate-based coupling agents and silane-based coupling agents. The thickness of a surfactant layer may be about 0.1-2 µm.

### (3) Binder Resin

By including the thermosetting resin in the binder resin, the bonded magnet and the main body can be firmly joined to each other. In the present specification, unless otherwise stated, the region (portion) other than the magnet powder (particles) is referred to as a binder resin (or simply a "resin"). The "resin" includes, for example, a base resin, a curing agent, a curing accelerator, a mold release agent, etc.

Examples of the thermosetting resin include epoxy resins, phenol resins, melamine resins, urea resins, and unsaturated polyester resins. A typical epoxy resin is usually a mixture of a prepolymer and a curing agent and is cured by cross-linkage networking with epoxy groups. Examples of the prepolymer of epoxy resin for use include novolak-type, bisphenol A-type, bisphenol F-type, biphenyl-type, naphthalene-type, aliphatic-type, and glycidylamine-type ones. Examples of a curing agent to be used for the epoxy resin include amine-based, phenol-based, and acid anhydride-based ones. The thermosetting resin may be one-component one.

(4) The bonded magnet may preferably have characteristics (such as magnetic characteristics, heat resistance, and demagnetization resistance) suitable for the specs of the rotor (electric motor). For example, the residual magnetic flux density (Br), which is an index of magnetic characteristics, may be 0.70 T (7.0 kG) or more in an embodiment, 0.72 T (7.2 kG) or more in another embodiment, 0.74 T (7.4 kG) or more in still another embodiment, 0.76 T (7.6 kG) or more in yet another embodiment, 0.78 T (7.8 kG) or more in still yet another embodiment, or 0.80 T (8.0 kG) or more in yet still another embodiment. Additionally or alternatively, Hk may be, for example, 535 kA/m or more in an embodiment, 540 kA/m or more in another embodiment, or 545 kA/m or more in still another embodiment. Hk is obtained as the magnitude of a reverse magnetic field when the residual magnetic flux density Br of the bonded magnet decreases by 10%. Hk is an index of reverse magnetic field resistance or squareness, which is important for bonded magnets used in electric motors.

### «Rotor»

The rotor is configured such that the bonded magnet is joined to the main body. A resin layer composed of a binder resin may be present, for example, in the vicinity of the joint interface between the bonded magnet and the main body. The average thickness of the resin layer is, for example, 0.1-5 µm in an embodiment, 0.2-4 µm in another embodiment, 0.3-3 µm in still another embodiment, 0.4-2 µm in yet another embodiment, or 0.5-1.5 µm in still yet another embodiment.

As described previously, as the resin layer becomes thicker, cohesive failure becomes more likely to occur in the resin layer. As the resin layer becomes thinner, the magnet particles come into direct contact with the main body, and interface failure is likely to occur. The resin layer may preferably be approximately continuous with few breaks.

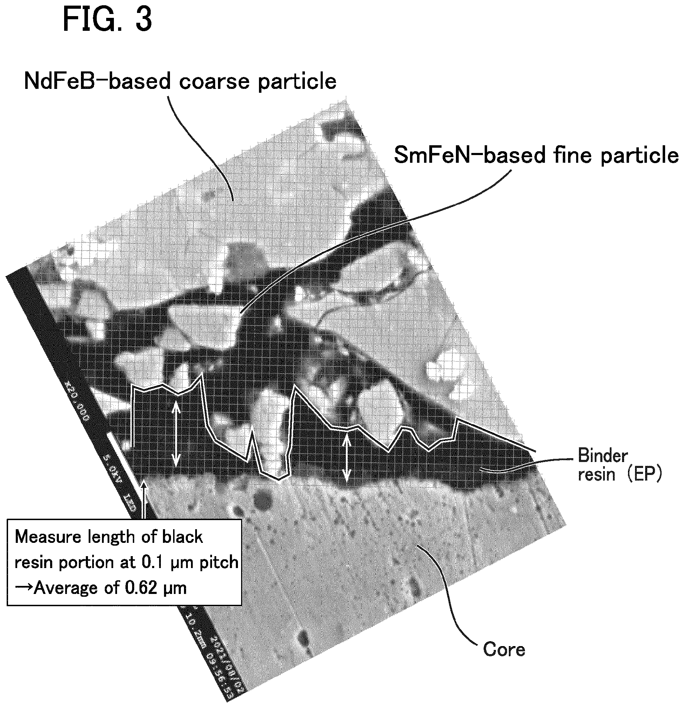

The average thickness of the resin layer is obtained by analyzing an image of the joint interface observed with a microscope. For example, the average thickness of the resin layer is obtained as an arithmetic average value of distances between the main body surface and the magnet particle surfaces measured along the main body surface in 0.1 µm increments within a predetermined field of view (6 µm×4.5 µm) (see FIG. 3). The average thickness of the resin layer may be obtained using image analysis software (such as ImageJ).

The bonding strength between the bonded magnet and the main body may be preferably larger than the maximum principal stress (or even its maximum value) acting, for example, on the bonded magnet (e.g., on the inner peripheral surface side (rotation axis side)). Suffice it to say that the lower limit of the bonding strength is, for example, 10 MPa in an embodiment, 15 MPa in another embodiment, 20 MPa in still another embodiment, or 25 MPa in yet another embodiment, depending on the factors of the rotor and the specs (such as rotation speed) of the electric motor. The higher the upper limit of the bonding strength, the better, but it is, for example, 55 MPa in an embodiment, 45 MPa in another embodiment, or 35 MPa in still another embodiment. The bonded magnet may preferably have a tensile strength that is sufficiently larger than the above maximum principal stress and bonding strength.

The rotor may be an inner rotor in which the stator is provided outside the rotor, or an outer rotor in which the stator is provided inside the rotor. The number of magnetic poles, support structure, etc. of the rotor are appropriately selected in accordance with the specs of the electric motor.

### «Electric Motor»

The electric motor may be a DC motor or an AC motor. The AC motor is, for example, an IPM motor or an SPM motor. In particular, the IPM motor that includes an interior magnet-type rotor in which the bonded magnet is joined to the main body composed of a soft magnetic material inside the main body is suitable for high-speed operation. The maximum rotational speed of the rotor can be, for example, 20,000 rpm or more in an embodiment, 23,000 rpm or more in another embodiment, 27,000 rpm or more in still another embodiment, or 30,000 rpm or more in yet another embodiment. Electric motors can be used, for example, as driving motors for vehicles, air conditioners, home appliances, etc. The bonded magnet may be preferably joined to the main body at the time of molding (e.g., during integral compression molding).

### «Method of Manufacturing Rotor»

(1) The rotor is obtained, for example, by molding one or more bonded magnets inside or outside the main body composed of a soft magnetic material. The bonded magnets are joined to the main body during the molding or during a thermal curing treatment after the molding. The inside of the main body is, for example, one or more slots (magnet holes) of a rotor core for an IPM motor. The form of the slots (such as the shape, size, arrangement, or number of slots per magnetic pole) is not limited. The outside of the main body is, for example, the outer peripheral surface of a rotor core for an SPM motor or a region in the vicinity thereof. The bonded magnets of an SPM motor are, for example, tile-shaped or ring-shaped.

### (2) Bonded Magnet Raw Material

The bonded magnet raw material is, for example, a mixed powder of magnet powder and binder resin, a mixture of melted or softened binder resin and magnet powder, a kneaded product obtained by kneading the mixture, a granular compound composed of a solidified mixture or kneaded product, a preliminarily molded body obtained by forming a compound into a desired shape, or the like.

Mixing and kneading of the magnet powder and the binder resin are carried out, for example, by heating them to about 40-120°C in an embodiment or about 80-100°C in another embodiment depending on the type and compounding of the binder resin. When using magnet powder obtained by hydrogen treatment, the mixing and kneading may be performed in a non-pressurized state while heating.

The preliminarily molded body is composed of a block of mixed powder or compound in a predetermined form (shape, size). The preliminarily molded body may have a form similar to the bonded magnet or a form dissimilar to the bonded magnet (such as a subdivided body that can be put into a cavity). The preliminarily molded body containing the magnet powder obtained by hydrogen treatment may be preferably molded under low pressure (e.g., 2 MPa or less in an embodiment or 0.5 MPa or less in another embodiment).

### (3) Molding Step

The bonded magnet is obtained, for example, by heating and compressing a bonded magnet raw material in a cavity provided inside or outside the main body.

The heating temperature is, for example, 120-200°C in an embodiment or 130-170°C in another embodiment. If the heating temperature is unduly low, the binder resin will be insufficiently softened or melted. If the heating temperature is unduly high, the thermosetting resin will be cured prematurely. In either case, the bonding strength between the bonded magnet and the main body may decrease.

The compression force (molding pressure) is, for example, 8-70 MPa in an embodiment, 10-65 MPa in another embodiment, 15-60 MPa in still another embodiment, 20-50 MPa in yet another embodiment, or 30-40 MPa in still yet another embodiment. If the compressive force is unduly small, the relative density and strength of the bonded magnet may decrease. If the compressive force is unduly large, deformation or the like of the main body may occur. A bonded magnet with a relatively large amount of resin is dense and can exhibit high strength and magnetic characteristics even when molded at low pressure.

When anisotropic magnet powder is included in the bonded magnet raw material, it may be molded in an oriented magnetic field. The oriented magnetic field is usually applied in a direction (orientation direction) intersecting a compression direction for the bonded magnet raw material. The magnitude of the oriented magnetic field (magnetic flux density on the inner circumferential surface of a cavity) is, for example, 0.5 to 3 T in an embodiment or 1 to 2 T in another embodiment. In addition to an electromagnet, a rare earth permanent magnet may be used as the magnetizing source for the oriented magnetic field.

Thermal curing treatment (curing treatment) for the thermosetting resin may be performed after molding. This can improve the bonding strength between the bonded magnet and the main body, the strength and heat resistance of the bonded magnet itself, etc. The curing treatment is performed, for example, by heating the bonded magnet to 130-250°C in an embodiment or 150-230°C in another embodiment. The curing treatment is performed, for example, by a batch process in which the integrated main body and bonded magnet are separately heated.

### Examples

### <First Example>

A plurality of test pieces were manufactured by joining bonded magnets and cores (main bodies), and their bonding strength was measured. The present invention will be described in detail below based on these specific examples.

### «Manufacture of Samples»

### (1) Bonded Magnet Raw Materials

Magnet powders were prepared, which are a commercially available NdFeB-based anisotropic magnet powder that is the coarse powder manufactured by hydrogen treatment (d-HDDR) (MAGFINE available from AICHI STEEL CORPORATION/Br: 1.28T, iHc: 1,313 kA/m, average particle diameter: 125 µm) and a commercially available SmFeN-based anisotropic magnet powder that is the fine powder (SmFeN alloy fine powder C available from Sumitomo Metal Mining Co., Ltd./Br: 1.35 T, iHc: 875 kA/m, average particle diameter: 3 µm).

Epoxy resin (referred to as "EP"), which is a thermosetting resin, and polyphenylene sulfide resin (referred to as "PPS"), which is a thermoplastic resin, were prepared as binder resins.

EP is composed of a composition obtained by kneading the raw materials listed below:
Base resin (NC-3000L available from Nippon Kayaku Co., Ltd.): 100 mass parts;
Curing agent (GPH-65 available from Nippon Kayaku Co., Ltd.): 74 mass parts;
Curing accelerator (TPP-S available from HOKKO CHEMICAL INDUSTRY CO., LTD.): 3 mass parts; and
Mold release agent (Carnauba Wax available from CERARICANODA Co., Ltd.): 2.6 mass parts.

The softening point of EP was 60°C. EP not compounded with the above mold release agent was also prepared (adhesive of Sample D2/see Table 1).

Bonded magnet raw materials were each prepared by compounding and mixing the magnet powder and the binder resin at the ratio listed in Table 1 (Samples 1 to 7). The magnet powder is composed of a coarse powder and a fine powder, and the mass ratio (the volume ratio is almost the same) of the coarse powder to the total amount is listed in Table 1.

The mixing of the magnet powder and the binder resin was performed in a non-pressurized state for 5 minutes while rotating the kneader at a low speed (10 rpm). During this operation, the container body of the kneader was maintained at 90°C. Thus, compounds in which the magnet powder and the binder resin were melt and mixed were obtained (melting and mixing step).

### (2) Core

A core (dummy) for the test piece imitating the rotor core was prepared. The core is composed of a rectangular parallelepiped (12.7 mm×12.7 mm×17.5 mm) cut out from a stack of electromagnetic steel sheets (non-oriented electromagnetic steel strip 20JNEH1200 available from JFE Steel Corporation/thickness 0.2 mm). The stack is composed by joining the electromagnetic steel sheets together with an adhesive. The stacked body was cut out by wire cutting so that the stacked surfaces of the electromagnetic steel sheets would appear on the end face (□12.7 mm) of the core. The wire-cut core end face was smooth to the extent that no visible irregularities were observed (surface roughness Ra: approximately 1.6 µm).

### (3) Molding

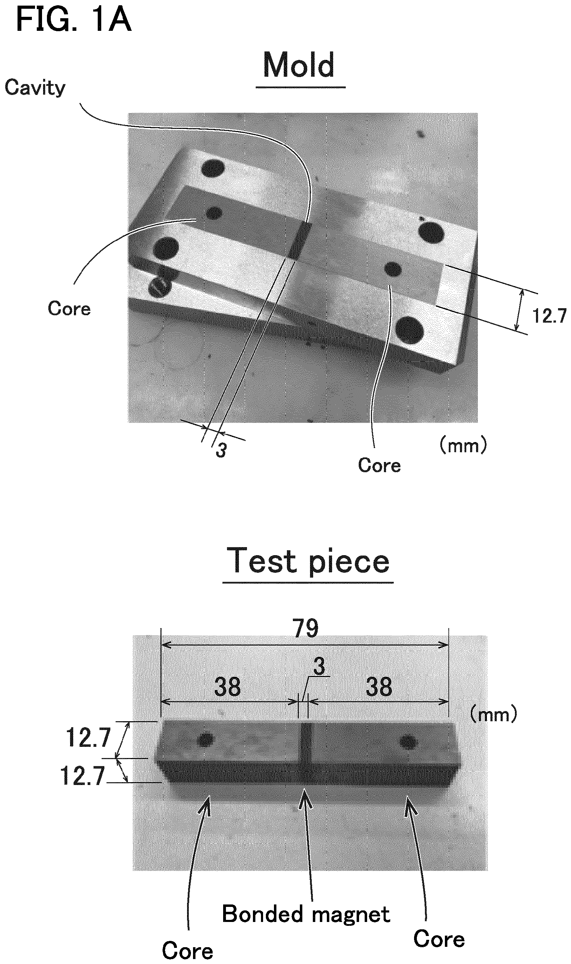

A mold having a cavity (12.7 mm×12.7 mm×79 mm) shown in FIG. 1A in the center was prepared. Cores were placed at both end sides in the cavity. The space between the cores (center space of the cavity/12.7 mm×12.7 mm×3 mm) was filled with a compound, and it was heated to about 150°C and compression-molded (molding step). The compression force was approximately 20-50 MPa.

Thus, a rectangular parallelepiped test piece (12.7 mm×12.7 mm×79 mm) in which both the cores and the bonded magnet were integrally compression-molded (insertion-molded) was obtained (see FIG. 1A).

### (4) Curing Treatment

The test pieces (Samples 1 to 7) were heated in the atmosphere at 150°C for 30 minutes to thermally cure the EPs and then subjected to a tensile test.

### «Manufacture of Comparative Samples»

(1) As listed in Table 1, a test piece (Sample A1) was also prepared, in which a bonded magnet and cores were integrally molded by injecting a molten mixture of a bonded magnet raw material (S5P-13MF available from Sumitomo Metal Mining Co., Ltd.) using PPS as a binder resin. The injection pressure at that time was 100 MPa.
(2) A test piece (Sample B1) was also prepared, in which only EP containing no magnet powder and cores were integrally compression-molded. The compression force at that time was approximately several MPa.
(3) A test piece (Sample C1) was also prepared, in which a separately prepared bonded magnet (12.7 mm×12.7 mm×3 mm) was joined to cores with an adhesive, rather than being integrally molded. For Sample C1, a compression-molded bonded magnet (see Sample 4) was used. Adhesive A (LOCTITE4061 available from Henkel) was used for Sample C1.
(4) Test pieces (Sample D1 and D2/12.7 mm×12.7 mm×76 mm) were also prepared, in which the cores were directly joined to each other with an adhesive without using a magnet. For Samples D1 and D2, EP was used as the adhesive. In Sample D2, however, EP not containing the above-described mold release agent was used. All the test pieces were subjected to a curing treatment (see Samples 1-7), and all the EPs were thermally cured.

In all the samples, the thickness of the magnet adhered to the cores (length in the extending direction of the test piece) was 3 mm, and the thickness of the adhesive layer was approximately 5 µm. The thickness of the adhesive layer was confirmed using a micrometer.

### «Measurement/Observation»

### (1) Tensile Test

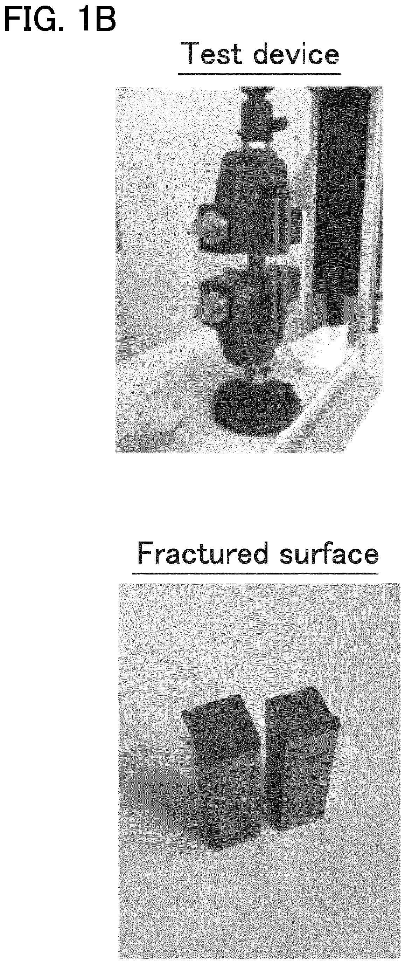

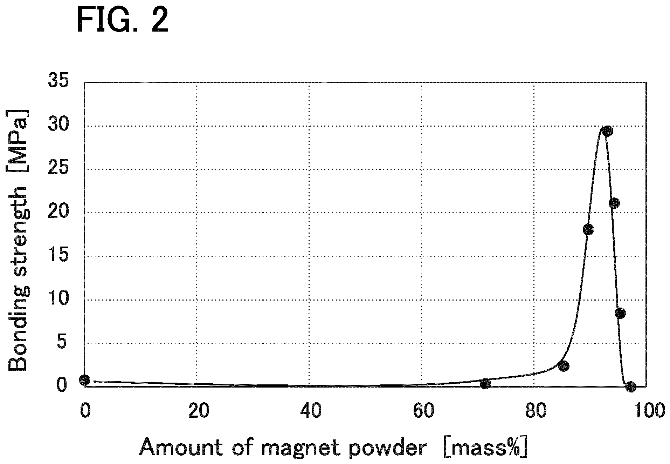

Both core parts of each test piece were gripped with an autograph (SHIMADZU CORPORATION AGS-J 5kN) shown in FIG. 1B, and a uniaxial tensile load was applied to the test piece. The value obtained by dividing the measured load at the time of the test piece's fracture by its cross-sectional area (12.7 mm×12.7 mm) was adopted as the bonding strength. The bonding strengths of the test pieces are collectively listed in Table 1. For reference, an example of a fractured test piece (Sample 4) after the tensile test is also shown in FIG. 1B. For Samples 1-7, the relationship between the bonding strength and the amount of magnet powder is illustrated in FIG. 2.

### (2) Observation

For the test piece of Sample 4 having a high bonding strength, the vicinity of the joint interface between the bonded magnet and the core was observed using a scanning electron microscope (SEM). The observed image is shown in FIG. 3. The black area in FIG. 3 represents the binder resin (EP).

An orthogonal mesh with an interval of 0.1 µm was applied on the observed image (field of view: 6 µm×4.5 µm). The horizontal axis of the mesh was set along the joint interface of the core. Using the mesh, the average thickness of the resin layer present in the vicinity of the core surface (in the vicinity of the joint interface) was obtained. Specifically, the length in the vertical axis direction from the core surface to the magnet particles was measured at intervals of 0.1 µm, and the arithmetic average value was obtained. As an example, the average thickness of the resin layer of Sample 4 was 0.62 µm.

### «Evaluation»

### (1) Bonding Strength

As apparent from Table 1 and FIG. 2, it has been found that the bonding strength between the bonded magnet and the core increases significantly when the amount of magnet powder (mass%/Resin amount=100-Amount of magnet powder) is within a predetermined range.

As can be seen by comparing Sample 4 and Sample C1 both with the same composition of the bonded magnets, the bonding strength was much larger in the integral compression molding than in the joint with adhesive. As apparent from Sample B1 and Samples D1 and D2, it has been also found that it is difficult to firmly join the cores together using only the binder resin.

The "bonding strength" refers to the tensile strength (fracture load/nominal cross-sectional area) between the cores interposing the bonded magnet, and does not matter the fracture mode (interfacial failure or cohesive failure) between the cores.

When the above-described tensile test using a test piece with a total length of 79 mm (distance between cores: 3 mm) is simulated, it has become apparent that the stress concentration portion where a stress of about 1.5 times the bonding strength listed in Table 1 occurs is present in the test piece. In the tensile test, it is considered that the test piece fractured from the stress concentration portion as the starting point. Considering this point, it is considered that the net bonding strength between the bonded magnet and the main body (Samples 1 to 7) is even larger than the bonding strength listed in Table 1.

### (2) Resin Layer

The reason why Samples 3-5 exhibited high peak bonding strength is considered to be that, as illustrated in FIG. 3, a resin layer having an appropriate thickness was formed in the vicinity of the joint interface. On the other hand, when the amount of binder resin was large as in Samples 1 and 2, it is considered that a thick resin layer was formed and cohesive failure occurred in that resin layer. Conversely, when the amount of binder resin was small as in Samples 6 and 7, it is considered that there were many breaks in the resin layer where the magnet particles directly contacted the core surface and interfacial failure occurred.

The bonding strength of Sample D1 with a very thin resin thickness of about 5 µm between the cores was considerably higher than that of Sample B1 with a thick resin thickness of 3 mm between the cores. This is considered to be related to one of the reasons why the high bonding strength is developed when a resin layer with an average thickness of about 0.1-5 µm is present in the vicinity of the joint interface with the core (main body).

### «Consideration»

In a conventional rotor for an IPM motor using a bonded magnet as the field source, the bonded magnet and the rotor core have been integrally injection-molded. In such a rotor, the maximum rotational speed is limited because the bonding strength between the bonded magnet and the rotor core is low (see Sample A1). On the other hand, in a rotor in which the bonded magnet and the rotor core are integrally compression-molded, the bonding strength between the bonded magnet and the rotor core is significantly increased (see Samples 3-5), and the maximum rotational speed is expected to be remarkably increased.

### « Supplementary»

### (1) Bonded Magnet

Individual bonded magnets of Samples 1-7 had a tensile strength of about 50-70 MPa, which was sufficiently higher than the bonding strength. Moreover, the relative density of the bonded magnet was about 98%, and it was sufficiently dense.

### (2) Core

A test piece was also manufactured, in which the core composed of a stack of electromagnetic steel sheets was replaced with a core composed of a cemented carbide solid body (non-magnetic carbide NF-30 (NA20) available from Sanalloy Industry Co., Ltd.). The surface to be joined of the core (□12.7 mm) was mirror-finished.

Using the test piece, the above-described tensile test was conducted in the same manner. As a result, it has been found that a test piece manufactured, for example, by integral compression molding in the same manner as Sample 4 exhibits a bonding strength as large as that of Sample 4. From this fact, it is considered that the properties of the surface to be joined of the core (fine irregularities, surface roughness, etc./see FIG. 3) have little or no influence on the bonding strength.

### (3) Magnetic Characteristics

The magnetic characteristics of individual bonded magnets of Samples 1-7 were measured at an ordinary temperature using a DC BH tracer (TRF-5BH-25Auto available from Toei Industry Co., Ltd.). The bonded magnets used in the measurement were subjected to heat compression molding (150°C×10-50 MPa) in an oriented magnetic field (955 kA/m) and then magnetized (applied magnetic field: 6 T). All the bonded magnets (in particular, Samples 3-5) exhibited sufficient magnetic characteristics. As an example, the bonded magnet corresponding to Sample 4 had Br: 0.80 T and Hk: 543 kA/m.

### <Second Example>

A numerical analysis (simulation) of the stress distribution caused by centrifugal force is performed on a rotor for an IPM motor in which a bonded magnet is embedded in a core. The present invention will be described in detail below based on such specific examples.

### «Analysis model»

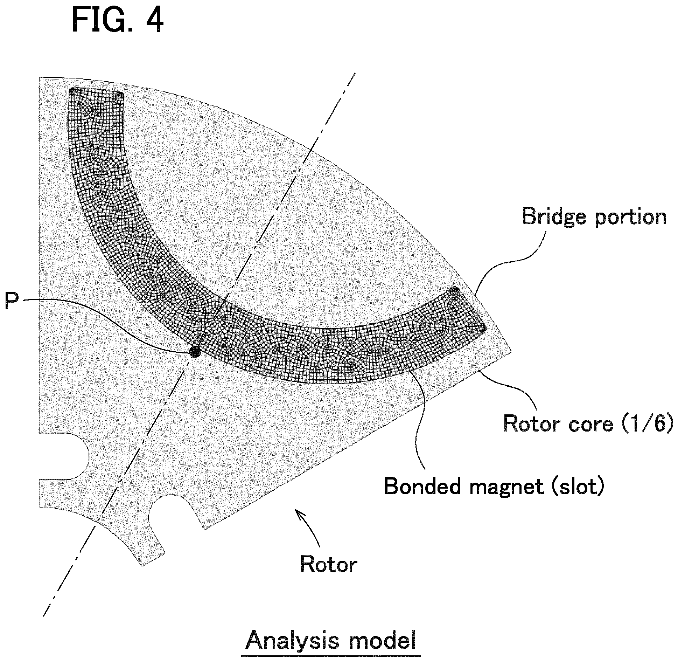

The rotor model (plane 1/6 period symmetrical model) used in the numerical analysis is illustrated in FIG. 4. The rotor core is approximately cylindrical (outer diameter: φ59.8 mm×hole diameter: φ13 mm×height: 45 mm). The slot provided in the rotor core is approximately arc-like and cylindrical (small radius: 11.29 mm×large radius: 14.29 mm×height: 45 mm), and the slot is constant in the radial direction (width: 3 mm). At this time, vertex P of the slot inner wall is 17.46 mm from the rotation center. The width of a bridge portion (radial length of the rotor core on the outer peripheral end side of the slot) is 0.5 mm.

The rotor core is composed of a stack of electromagnetic steel sheets, and the method of fixing the electromagnetic steel sheets is swage. Each electromagnetic steel sheet is assumed to be 35H440 (0.35 mm thick) available from NIPPON STEEL CORPORATION and thus has a density of 7.7 g/cm³, a Young's modulus of 110 GPa, and a Poisson's ratio of 0.3. The number of stacked electromagnetic steel sheets is 128.

The bonded magnet embedded in the rotor core is assumed to be the bonded magnet of Sample 4 (Table 1), and has a density of 5.5 g/cm³, a Young's modulus of 4 GPa, and a Poisson's ratio of 0.3. The bonded magnet has the same shape as the slot of the rotor core.

### «Numerical Analysis»

The numerical analysis is performed on a rotor model (referred to as "Model 1") in which the outer wall surface of the bonded magnet is bonded to (integrated with) the inner wall surface of the slot, and a rotor model (referred to as "Model C") in which the outer wall surface of the bonded magnet is merely in contact with the inner wall surface of the slot, rather than being bonded thereto. Restraint conditions in this analysis are: being fixed in the circumferential direction; friction coefficient of 0.1; load of centrifugal force; and rotation speed of 8,500 rpm, 17,000 rpm, 25,500 rpm, or 34,000 rpm. Abaqus2019 available from Dassault Systèmes is used as the analysis software.

### «Analysis Results»

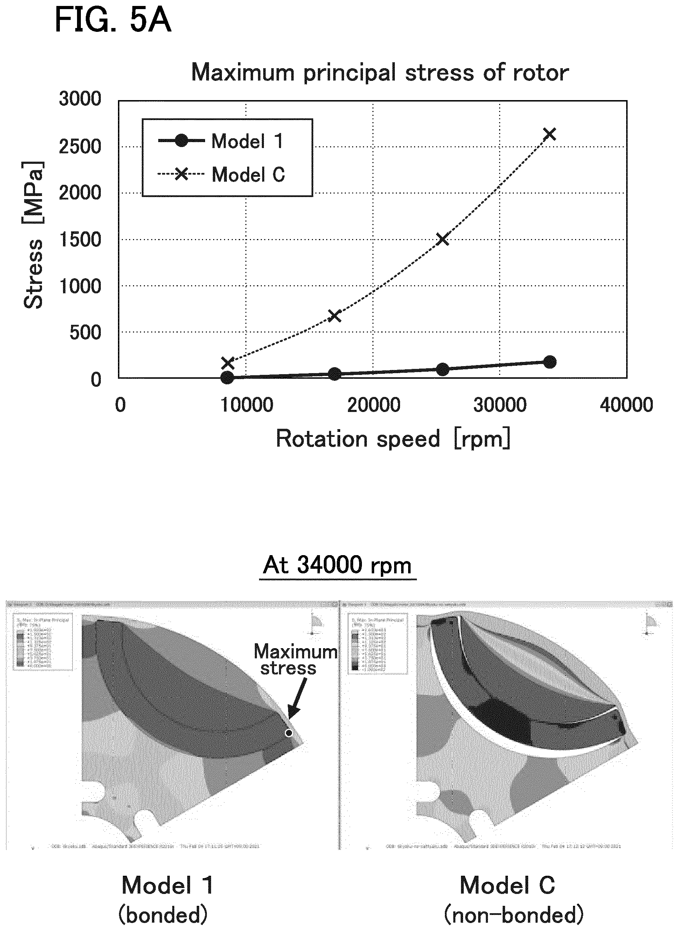

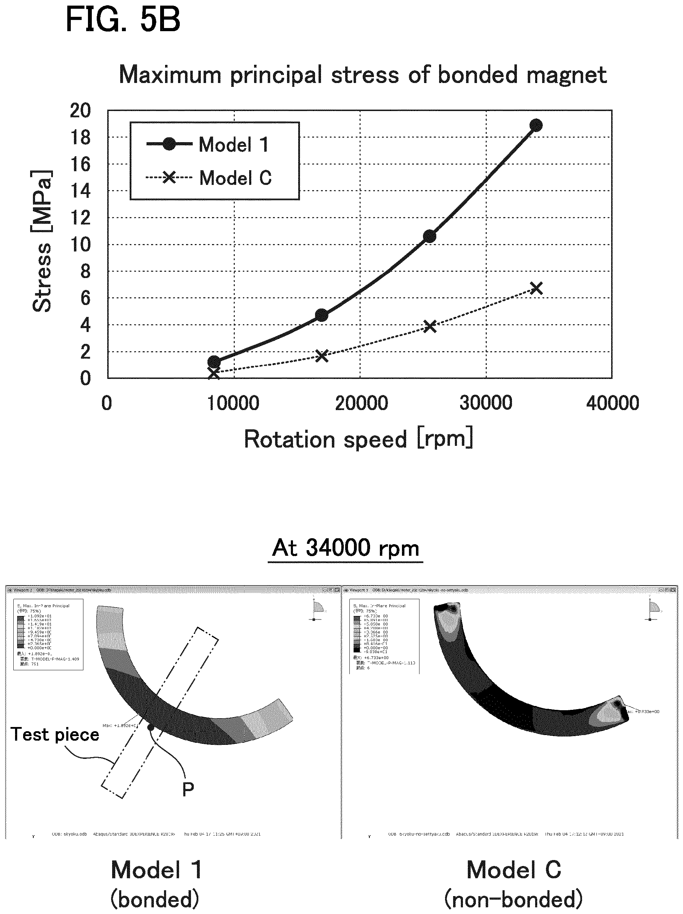

FIG. 5A illustrates, based on the analysis results, the relationship between the rotation speed and the maximum principal stress generated in the rotor. Likewise, FIG. 5B illustrates the relationship between the rotation speed and the maximum principal stress generated in the bonded magnet. Each figure also illustrates an example of the maximum principal stress distribution (34,000 rpm) generated in the rotor or bonded magnet. FIGS. 5A and 5B are collectively simply referred to as "FIG. 5."

### «Evaluation»

### (1) Rotor

As apparent from FIG. 5A, it is found that the maximum stress is generated at the bridge portion of the rotor core in both the models.

In the rotor (Model 1) in which the bonded magnet is bonded to the slot, the maximum principal stress is suppressed to be low even when the rotation speed increases. Since the yield stress of the electromagnetic steel sheet (silicon steel sheet) is about 320 MPa (tensile strength is about 450 MPa), the rotor of Model 1 does not undergo plastic deformation even in the high-speed rotation range.

On the other hand, in the rotor (Model C) in which the bonded magnet is simply fitted in the slot, the maximum principal stress rapidly increases as the rotation speed increases. Accordingly, the rotor of Model C undergoes large plastic deformation in the high-speed rotation range. At 34,000 rpm, as appearing in the stress distribution diagram, the rotor swells outward to the extent that a gap is formed on the inner peripheral side of the bonded magnet.

### (2) Bonded Magnet

As apparent from FIG. 5B, in both the models, the maximum principal stress generated in the bonded magnet increases as the rotation speed increases. The maximum principal stress is larger in Model 1 than in Model C.

In the case of Model 1, however, the maximum principal stress generated in the bonded magnet is about 19 MPa even at 34,000 rpm. At 25,500 rpm, the maximum principal stress is about 11 MPa.

### «Consideration»

The present examples show that, provided that the bonding strength between the bonded magnet and the rotor core is larger than the maximum principal stress generated in the bonded magnet, the state of Model 1 is maintained, and the maximum principal stress generated in the rotor is suppressed up to the high-speed rotation range. For example, when the rotor is configured such that the rotor core and the bonded magnet are integrated at a high bonding strength shown in the first example (29.4 MPa for Sample 4), it can rotate at a high speed of 34,000 rpm or higher (theoretically 42,000 rpm or higher).

It is found from FIG. 5B that the maximum stress generated in the bonded magnet itself can occur near the vertex P. In this regard, the test piece of the first example has a shape in which the bonded magnet embedded in the rotor is cut out approximately at the center in the radial direction (shape illustrated by the broken line in FIG. 5B).

### <Third Example>

The rotor of an actually manufactured IPM motor was subjected to a spin test to evaluate its deformation amount. The present invention will be described in detail below based on such specific examples.

### «Production of Rotor»

Three types of Rotors 1, C1, and C2 were manufactured. The specs of the rotor cores were the same as those of the analytical models described in the second example.

Rotor 1 was formed by integrally compression-molding the bonded magnets into the slots. The composition and manufacturing conditions of the bonded magnets are the same as those of Sample 4 (Table 1).

Rotor C 1 was formed by integrally injection-molding the bonded magnets into the slots. The composition and manufacturing conditions of the bonded magnets are the same as those of Sample A1 (Table 1).

Rotor C2 was formed by inserting separately injection-molded bonded magnets into the slots. The composition and manufacturing conditions of each bonded magnet itself were almost the same as those of Sample A1 (Table 1), but the bonded magnets were simply inserted into the slots without adhesion.

### «Spin Test»

### (1) Test Method

Each rotor was set in an air turbine-type spin tester (available from Maruwa Electronic Inc.) and rotated at high speeds. The rotation speed was increased from 0 rpm with a rate of 2,000 rpm/s. After reaching a predetermined measurement rotation speed, the rotor was held for 15 seconds and then taken out, and its outer diameter was measured. The measurement rotation speeds were 8,000 rpm, 10,000 rpm, 12,000 rpm, 14,000 rpm, 16,000 rpm, 18,000 rpm, 20,000 rpm, 22,000 rpm, 24,000 rpm, 26,000 rpm, and 28,000 rpm.

### (2) Outer Diameter Measurement

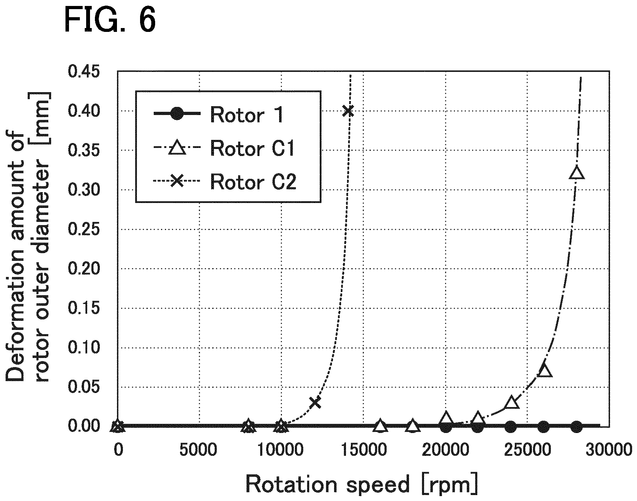

The outer diameter of each rotor was measured at three locations along the height direction (rotation axis direction): 5 mm, 22.5 mm, and 40 mm from the upper end side. For each measurement location, the outer diameter near the center of the magnetic pole (the center of the bonded magnet) was measured in two directions intersecting each other. The arithmetic average value of the obtained outer diameter measurement values (3×2 values) was adopted as the outer diameter value for each measurement rotation speed. The difference between this outer diameter value and the initial outer diameter value (before test) was adopted as the outer diameter deformation amount for each measured rotation speed. The results are summarized in FIG. 6.

### «Evaluation»

As apparent from FIG. 6, it has been confirmed that the outer diameter of Rotor 1 does not change even when Rotor 1 is rotated at high speeds up to 28,000 rpm, and Rotor 1 is not plastically deformed. This is considered to be because the bonded magnets are firmly joined to the rotor core (slots), which disperses the centrifugal force acting on the rotor and avoids the stress concentration at the bridge portions and the like.

In Rotor C1 in which the bonding strength between the bonded magnets and the rotor core was insufficient, the amount of plastic deformation rapidly increased at 20,000 rpm or higher. Furthermore, in Rotor C2 in which the bonded magnets were not joined to the rotor core, the amount of plastic deformation rapidly increased at 10,000 rpm or higher.

From the above, it has been confirmed that the rotor of the present invention is configured such that the bonded magnet is firmly joined to the core (main body), and can be rotated at a high speed.

**[Table 1]**

| Sample No. | Joining method | Composition of bonded magnet (mass%) | | | | | | Adhesive | Bonding strength (MPa) |
|---|---|---|---|---|---|---|---|---|---|
| | | Magnet powders | | | | Binder resin | | | |
| | | Coarse powder (NdFeB-based powder) | Fine powder (SmFeN-based powder) | Total amount | Coarse powder /Total amount | Compounding amount | Type | | |
| 1 | Integral compression molding | 49.9 | 21.4 | 71.3 | 70 | 28.7 | EP | - | 0.4 |
| 2 | | 59.7 | 25.6 | 85.3 | | 14.7 | | | 2.4 |
| 3 | | 62.8 | 26.9 | 89.7 | | 10.3 | | | 18.1 |
| 4 | | 65.2 | 27.9 | 93.1 | | 6.9 | | | 29.4 |
| 5 | | 66.0 | 28.3 | 94.3 | | 5.7 | | | 21.1 |
| 6 | | 66.8 | 28.6 | 95.4 | | 4.6 | | | 8.5 |
| 7 | | 68.1 | 29.2 | 97.3 | | 2.7 | | | 0 |
| A1 | Integral injection molding | 72.6 | 18.2 | 90.8 | 80 | 9.2 | PPS | - | 4.7 |
| B1 | Integral compression molding | - (Only binder) | | | | 100 | EP | - | 0.8 |
| C1 | Adhesion | 65.2 | 27.9 | 93.1 | 70 | 6.9 | EP | A | 15.6 |
| D1 | Adhesion | (Direct adhesion of cores simply with adhesive) | | | | | | EP | 2.3 |
| D2 | | | | | | | | EP (Without mold release agent) | 7.5 |

| | | | | | | | | | |
|---|---|---|---|---|---|---|---|---|---|
| Binder resin ··· EP: Epoxy resin (Thermosetting resin)/PPS: Polyphenylene sulfide resin (Thermoplastic resin) Adhesive ··· A: LOCTITE4061 (available from Henkel) | | | | | | | | | |

## Claims

1. A rotor comprising:
a main body composed of a soft magnetic material; and
a permanent magnet provided inside or outside the main body,
the permanent magnet being a bonded magnet comprising a magnet powder and a binder resin that binds the magnet powder,
the bonded magnet including 87-96 mass% of the magnet powder relative to the bonded magnet as a whole,
the magnet powder including coarse powder having an average particle diameter of 40-200 µm and fine powder having an average particle diameter of 1-10 µm, the coarse powder having a mass ratio of 60-90 mass% to a total of the coarse powder and the fine powder,
the binder resin including a thermosetting resin,
the bonded magnet being joined to the main body.

2. The rotor according to claim 1, wherein the bonded magnet has a resin layer with an average thickness of 0.1-5 µm in a vicinity of a joint interface with the main body.

3. The rotor according to claim 1 or 2, wherein the thermosetting resin is an epoxy resin.

4. The rotor according to any one of claims 1 to 3, wherein
the coarse powder includes NdFeB-based magnet powder whose basic components are Nd, Fe, and B, and
the fine powder includes SmFeN-based magnet powder whose basic components are Sm, Fe, and N and/or SmCo-based magnet powder whose basic components are Sm and Co.

5. The rotor according to any one of claims 1 to 4, wherein the bonded magnet is formed by compression molding.

6. The rotor according to any one of claims 1 to 5, wherein the main body is composed of a stack of electromagnetic steel sheets.

7. An electric motor comprising the rotor according to any one of claims 1 to 6 and a stator corresponding to the rotor.

8. The electric motor according to claim 7, wherein the rotor is an interior magnet type in which the bonded magnet is integrally compression-molded inside the main body.

9. The electric motor according to claim 8, wherein the rotor has a maximum rotational speed of 20,000 rpm or more.
